(19) Europäisches Patentamt / European Patent Office / Office européen des brevets

(11) **EP 3 394 630 B1**

(12) **FASCICULE DE BREVET EUROPEEN**

(45) Date de publication et mention de la délivrance du brevet:
**07.10.2020 Bulletin 2020/41**

(21) Numéro de dépôt: **16822189.3**

(22) Date de dépôt: **23.12.2016**

(51) Int Cl.:
*G01S 3/46* (2006.01)     *G01S 3/48* (2006.01)
*G01S 3/04* (2006.01)

(86) Numéro de dépôt international:
**PCT/EP2016/082649**

(87) Numéro de publication internationale:
**WO 2017/109219 (29.06.2017 Gazette 2017/26)**

(54) **PROCÉDÉ DE DÉTERMINATION DE LA DIRECTION D'ARRIVÉE EN PRÉSENCE DE REPLIEMENT SPECTRAL ET DISPOSITIF ASSOCIÉ**

VERFAHREN ZUR BESTIMMUNG DER ANKUNFTSRICHTUNG IN GEGENWART VON ALIASING UND ZUGEHÖRIGE VORRICHTUNG

METHOD FOR DETERMINING THE DIRECTION OF ARRIVAL IN THE PRESENCE OF ALIASING AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2015 FR 1502685**

(43) Date de publication de la demande:
**31.10.2018 Bulletin 2018/44**

(73) Titulaire: **Thales**
**92400 Courbevoie (FR)**

(72) Inventeur: **LE MEUR, Anne**
**78851 Elancourt (FR)**

(74) Mandataire: **Lavoix**
**2, place d'Estienne d'Orves**
**75441 Paris Cedex 09 (FR)**

(56) Documents cités:
**WO-A1-2015/158615**

- **SUNDEEP PRABHAKAR CHEPURI ET AL: "Multiple hypothesis testing for compressive wideband sensing", SIGNAL PROCESSING ADVANCES IN WIRELESS COMMUNICATIONS (SPAWC), 2012 IEEE 13TH INTERNATIONAL WORKSHOP ON, IEEE, 17 juin 2012 (2012-06-17), pages 590-594, XP032231277, DOI: 10.1109/SPAWC.2012.6292978 ISBN: 978-1-4673-0970-7**
- **DOMINGUEZ-JITNENEZ M E ET AL: "Analysis and design of multirate synchronous sampling schemes for sparse multiband signals", SIGNAL PROCESSING CONFERENCE (EUSIPCO), 2012 PROCEEDINGS OF THE 20TH EUROPEAN, IEEE, 27 août 2012 (2012-08-27), pages 1184-1188, XP032254474, ISBN: 978-1-4673-1068-0**
- **MISHALI M ET AL: "From Theory to Practice: Sub-Nyquist Sampling of Sparse Wideband Analog Signals", IEEE JOURNAL OF SELECTED TOPICS IN SIGNAL PROCESSING, IEEE, US, vol. 4, no. 2, 1 avril 2010 (2010-04-01), pages 375-391, XP011327603, ISSN: 1932-4553, DOI: 10.1109/JSTSP.2010.2042414**
- **RAMAN VENKATARAMANI ET AL: "Optimal Sub-Nyquist Nonuniform Sampling and Reconstruction for Multiband Signals", IEEE TRANSACTIONS ON SIGNAL PROCESSING, IEEE SERVICE CENTER, NEW YORK, NY, US, vol. 49, no. 10, 1 octobre 2001 (2001-10-01), XP011059439, ISSN: 1053-587X**

**Description**

La présente invention concerne un procédé de détermination de la direction d'arrivée en présence de repliement spectral et un dispositif associé.

De manière générale, la présente invention se rapporte au domaine de la réception passive large bande de signaux électromagnétiques (signaux radar ou de communication).

Il est notamment souhaité de déterminer la direction d'arrivée (aussi désignée par l'acronyme « DOA » pour le terme « direction of arrival »).

Pour cela, un interféromètre à goniométrie de phase destiné à capter des signaux électromagnétiques et à calculer leur direction d'arrivée est utilisé. Les distances successives entre antennes respectent des proportions connues bien déterminées afin d'assurer une mesure de direction d'arrivée du signal non ambiguë.

Pour des raisons technologiques, dans le cadre d'écoutes large bande de signaux électromagnétiques, il n'est généralement pas possible de réaliser un échantillonnage à une fréquence supérieure à deux fois la largeur de la bande occupée par l'ensemble des signaux analogiques (dite bande large), c'est-à-dire de respecter le critère de Nyquist. Cela nécessite en effet des convertisseurs numériques ultra rapides, qui ne satisfont pas les contraintes de poids/volume/consommation, quand ils ne sont pas complètement inaccessibles pour les largeurs de bande qu'on cherche à traiter.

Quand le critère de Nyquist n'est pas respecté, les signaux issus de toutes les bandes de Nyquist se replient dans la première bande de Nyquist, et sont susceptibles de générer des mélanges, ce qui réduit considérablement les performances du récepteur. Afin d'estimer correctement les paramètres de ces signaux, et en particulier la DOA, on utilise ici un récepteur à M fréquences d'échantillonnage distinctes, mais ne respectant pas le critère de Nyquist, M étant un nombre entier.

Le choix judicieux du nombre M de fréquences d'échantillonnage et de leur valeur permet de lever les ambiguïtés fréquentielles, c'est-à-dire de garantir l'existence d'une correspondance bi-univoque entre une fréquence analogique dans la bande totale (qu'on appellera fréquence radioélectrique ou fréquence vraie) et un M -uplet de fréquences prélevées dans la première bande de Nyquist de chacun des M échantillonnages (qu'on appelera M-uplet de fréquences repliées).

WO2015/1158615 un procédé de détection passive mis en œuvre par un dispositif comprenant un ou plusieurs capteurs, ledit procédé comportant une étape d'échantillonnage des signaux reçus sur chaque capteur à l'aide de différentes valeurs de fréquence d'échantillonnage sub-Shannon, une étape de transformation des signaux échantillonnés dans le domaine fréquentiel par transformée de Fourier discrète, le pas fréquentiel étant choisi constant, et pour chaque case temps/fréquence, une étape de calcul de la puissance normalisée dans chaque voie de réception, une étape de calcul de la somme quadratique des puissances calculées en tenant compte de la puissance d'un parasite éventuel, et une étape de seuillage de façon à assurer une probabilité de fausse alarme donnée.

Quand un seul signal est présent dans la bande large, il est possible d'effectuer la détection à l'aide d'une méthode classique de détection en présence de bruit thermique. Il est aussi possible de calculer la direction d'arrivée du signal.

Le cas où le spectre complexe du signal se superpose à l'une de ses répliques doit être traité de manière particulière. Pour un signal réel dont les fréquences vérifient $f_{min} \leq |f| \leq f_{max}$, et pour une fréquence d'échantillonnage $f_m$ donnée, une condition suffisante pour qu'il n'y ait pas de superposition est qu'il existe un entier $k$ tel que $k\dfrac{f_m}{2} < f_{min}$

et $f_{max} < (k+1)\dfrac{f_m}{2}$. Pour simplifier, on peut dire qu'il n'y a pas de superposition lorsque le reste de la division entière de la fréquence porteuse du signal par $\dfrac{f_m}{2}$ est supérieur à la bande instantanée du signal, ou, autrement dit, lorsque la fréquence porteuse du signal est « suffisamment loin » des multiples de la demi fréquence d'échantillonnage.

Cependant, dans un système passif, le signal reçu est inconnu et le respect de cette condition n'est pas garanti.

Quand plusieurs signaux sont simultanément présents dans la bande large, la situation se complique encore, car deux signaux simultanés mais séparés fréquentiellement, peuvent se superposer en temps et en fréquence après repliement. Ces mélanges sont d'un type particulier : ils se produisent pour une fréquence d'échantillonnage, voire simultanément pour plusieurs fréquences d'échantillonnage, mais pas pour toutes, en raison de l'unicité de la correspondance entre l'ensemble des fréquences radio et l'ensemble des M-uplets de fréquences.

Il existe donc un besoin pour un procédé de détermination de la direction d'arrivée de signaux émis par une source radioélectrique permettant de remédier aux inconvénients précités et notamment de traiter les situations impliquant plusieurs signaux.

Pour cela, la présente description porte notamment sur le procédé de détermination de la direction d'arrivée de signaux radioélectriques en présence de repliement spectral, le procédé utilisant un réseau interférométrique à quatre antennes à diagrammes identiques, et à échantillonnage par deux fréquences d'échantillonnages distinctes par antenne, le repliement spectral étant tel que dans la représentation temps/fréquence d'un signal, le signal étant dit signal utile, au plus une antenne est affectée par un phénomène de parasitage sur ses deux fréquences d'échantillonnage, le phénomène étant dû à un premier parasite externe, et à un deuxième parasite étant soit un deuxième parasite externe, soit un parasite interne. Le procédé comprend la réception d'un signal par chaque antenne, l'échantillonnage des signaux reçus sur chacune des quatre antennes (16) selon deux fréquences sub-Nyquist formant l'ensemble $\{f_1, perm(f_1); f_2, perm(f_2); f_3, perm(f_3); f_4, perm(f_4)\}$, où $f_1, f_2, f_3$ et $f_4$ sont quatre fréquences sub Nyquist distinctes et *perm* est une permutation de l'ensemble $\{f_1, f_2, f_3, f_4\}$, de telle sorte que les signaux reçus sur deux antennes distinctes sont échantillonnés par deux paires distinctes de fréquence d'échantillonnage sub Nyquist. Le procédé comprend l'analyse spectrale par application, pendant une durée d'acquisition synchrone sur tous les échantillonnages, d'une transformée de Fourier discrète pour obtenir 2P grilles temps-fréquence, chaque élément d'une grille contenant un vecteur complexe appelé mesure, la détection de la présence ou de l'absence de signal utile à une pluralité de fréquences. Le procédé comprenant également, pour tous les signaux utiles détectés la détermination de la situation de parasitage pour chaque antenne, pour les autres antennes que l'antenne affectée par le double parasitage, l'extraction de la phase du signal utile, et pour l'éventuelle antenne affectée par le double parasitage, l'estimation de la phase du signal utile, comprenant la première estimation d'une première paire de phases candidates $\xi_1^1$ et $\xi_1^2$ à partir de la mesure z résultant du mélange du signal utile, du premier signal parasite, et de bruit, la deuxième estimation d'une deuxième paire de phases candidates $\xi_2^1$ et $\xi_2^2$ à partir de la mesure $\zeta$ résultant du mélange du signal utile, du deuxième parasite, et de bruit, et la sélection de valeurs de phases parmi les phases candidates pour obtenir une estimation de la phase du signal utile sur l'antenne affectée par le double parasitage.

Suivant des modes de réalisation particuliers, le procédé comprend une ou plusieurs des caractéristiques suivantes, prise(s) isolément ou suivant toutes les combinaisons techniquement possibles :

- la pluralité de fréquences de la détection sont des fréquences analogiques régulièrement espacées d'un intervalle de fréquence inverse au temps d'acquisition.
- la première estimation de premières phases candidates comporte le calcul des équations suivantes :

$$\xi_1^1 = \alpha + Arc\cos\frac{\rho^2 + r^2 - r_1^2}{2\rho r}$$

et

$$\xi_1^2 = \alpha - Arc\cos\frac{\rho^2 + r^2 - r_1^2}{2\rho r}$$

Où:

- $\alpha$ est l'argument de la mesure *z*,
- $p$ est le module de la mesure *z*,
- $r$ est le module du signal utile, et
- $r_1$ est le module du premier signal parasite.

- la deuxième estimation d'une deuxième paire de phases candidates comporte le calcul d'équations en fonction de la nature du deuxième parasite, lorsque le deuxième parasite est une parasite interne, les équations étant

$$\xi_2^1 = Arc\cos(y/2r)$$

et

$$\xi_2^2 = -Arc\cos(y/2r)$$

Où:

- $r$ est le module du signal utile, et
- $y$ est la partie réelle de la mesure $\zeta$

lorsque le deuxième parasite est un parasite externe, les équations étant

$$\xi_2^1 = \alpha + Arc\cos\frac{\rho_2{}^2 + r^2 - r_2^2}{2\rho_2 r}$$

et

$$\xi_2^2 = \alpha - Arc\cos\frac{\rho_2{}^2 + r^2 - r_2^2}{2\rho_2 r}$$

Où:

- $\alpha$ est l'argument de la mesure $\zeta$,
- $\rho_2$ est le module de la mesure $\zeta$,
- $r$ est le module du signal utile, et
- $r_2$ est le module du deuxième signal parasite.

- la sélection de valeurs de phases comporte l'association des phases candidates pour déterminer les deux valeurs de phase correspondant à une valeur commune représentant la phase vraie, pour obtenir deux mesures de phases associées, et l'estimation de la phase en fusionnant les deux mesures de phases associées.

- l'association des phases est mise en œuvre à l'aide d'une règle, la règle étant la règle suivante : $\xi_1^i$ et $\xi_2^j$ sont associés si le couple $\left(\xi_1^i, \xi_2^j\right)$ est le couple parmi les quatre couples $\left(\xi_2^k, \xi_2^l\right)_{k\in\{1,2\}, l\in\{1,2\}}$ qui vérifie $\left|\xi_1^i - \xi_2^j\right| = \underset{k,l}{Min}\left|\xi_1^k - \xi_2^l\right|$.

- l'estimation de la phase comprend le calcul de l'expression suivante :

$$\hat{x} = \frac{\sigma_2^2}{\sigma_1^2 + \sigma_2^2}\xi_1 + \frac{\sigma_1^2}{\sigma_1^2 + \sigma_2^2}\xi_2$$

Où:

- $\hat{x}$ est l'estimée de la phase du signal utile ;
- $\xi_1$ est égal au $\xi_1^i$ obtenu dans l'étape d'association ;
- $\xi_2$ est égal au $\xi_2^j$ obtenu dans l'étape d'association ;
- $\sigma_1^2$ est la variance de $\xi_1$, définie par $\sigma_1^2 = \frac{\sigma^2}{\rho^2}\cdot\frac{4\rho^2 r_1^2}{4\rho^2 r^2 - \left(\rho^2 + r^2 - r_1^2\right)^2}$ , et

- $\sigma_2^2$ est la variance de $\xi_2$, définie :

$$\cdot \; \sigma_2^2 = \frac{\sigma^2}{4r^2 - y^2} \, ,$$

   ◦ lorsque le deuxième parasite est interne, par     ou

   ◦ lorsque le deuxième parasite est externe, par

$$\sigma_2^2 = \frac{\sigma^2}{\rho_2^2} \cdot \frac{4\rho_2^2 r_2^2}{4\rho^2 r^2 - \left(\rho_2^2 + r^2 - r_2^2\right)^2}$$

- le procédé comporte, en outre le calcul de phases différentielles et le calcul de la direction d'arrivée à partir des phases différentielles.

La présente description porte aussi sur un dispositif de détermination de la direction d'arrivée de signaux radioélectriques en présence d'un repliement spectral, le dispositif comprenant un réseau interférométrique à quatre antennes à diagrammes identiques et à échantillonnage par deux fréquences d'échantillonnages distinctes par antenne, chaque antenne étant propre à recevoir un signal dit signal reçu, le repliement spectral étant tel que dans la représentation temps/fréquence d'un signal, le signal étant dit signal utile, au plus une antenne est affectée par un phénomène de parasitage sur ses deux fréquences d'échantillonnage, le phénomène étant dû à un premier parasite externe, et à un deuxième parasite étant soit un deuxième parasite externe, soit un parasite interne, un contrôleur adapté pour mettre en œuvre l'échantillonnage, l'analyse spectrale, la détection de la présence ou de l'absence de signal utile, puis, pour chaque signal utile détecté, la détermination de la situation de parasitage pour chaque antenne, l'extraction de la phase du signal utile sur les autres antennes que l'éventuelle antenne affectée par le double parasitage et l'estimation de la phase de l'antenne affectée par le double parasitage d'un procédé tel que précédemment décrit.

Suivant un mode de réalisation, le contrôleur comporte une unité d'échantillonnage propre à mettre en œuvre l'échantillonnage du procédé tel que précédemment décrit et un calculateur propre à mettre en œuvre l'analyse spectrale, la détection de la présence ou de l'absence de signal utile, puis, pour chaque signal utile détecté, la détermination de la situation de parasitage pour chaque antenne, l'extraction de la phase du signal utile pour les autres antennes que l'antenne affectée par le double parasitage et l'estimation de la phase du signal utile pour l'éventuelle antenne affectée par le double parasitage du procédé tel que précédemment décrit.

Selon un mode de réalisation, l'unité d'échantillonnage comporte deux convertisseurs analogique-numérique par antenne.

D'autres caractéristiques et avantages de l'invention apparaîtront à la lecture de la description qui suit, de modes de réalisation de l'invention, donnée à titre d'exemple uniquement et en référence aux dessins qui sont :

- figure 1, une vue schématique d'un dispositif de détermination de la direction d'arrivée de signaux radioélectriques en présence de repliement spectral, et
- figure 2, une vue schématique d'une partie du dispositif de la figure 1.

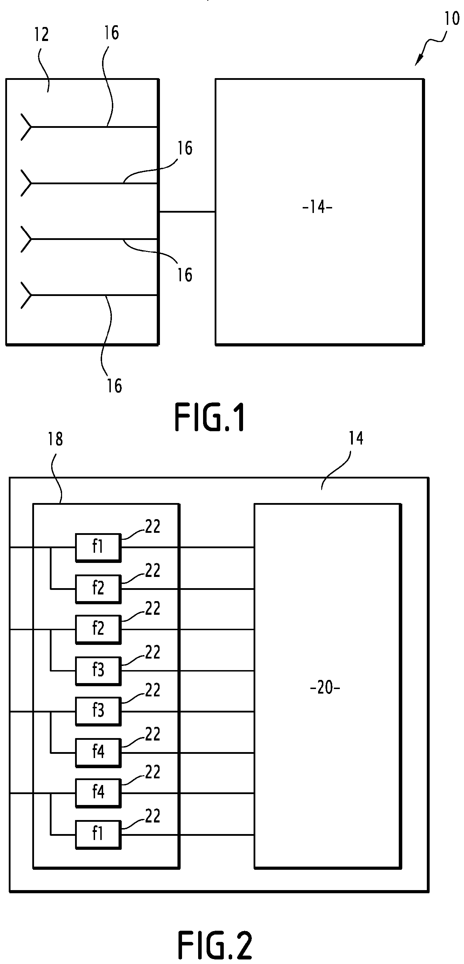

Un dispositif 10 de détermination de la direction d'arrivée de signaux radioélectriques en présence de repliement spectral est illustré à la figure 1.

Le dispositif 10 comprend un réseau interférométrique 12 et un contrôleur 14.

Le réseau interférométrique 12 est un réseau à P antennes 16 à diagrammes identiques.

Le choix de $P = M = 4$ permet d'obtenir un interféromètre non ambigu angulairement et fréquentiellement sur la totalité de la large bande.

Chaque antenne 16 est propre à recevoir un signal dit signal reçu.

Dans la suite, chaque antenne 16 est également désignée sous le terme de « capteur ».

Le contrôleur 14 est propre à traiter chaque signal reçu par les antennes 16 pour obtenir la direction d'arrivée en présence de repliement spectral.

Pour cela, le contrôleur 14 est propre à mettre en œuvre un procédé de détermination de la direction d'arrivée de signaux radioélectriques en présence de repliement spectral.

Un exemple de contrôleur 14 est illustré schématiquement à la figure 2.

Le contrôleur 14 comporte une unité d'échantillonnage 18 et un calculateur 20.

Le module d'échantillonnage 18 est propre à échantillonner selon deux fréquences sub-Nyquist distinctes chaque signal reçu par une antenne 16, de sorte que chaque antenne 16 comporte deux voies de mesure.

On dispose ainsi de deux jeux de fréquences d'échantillonnage. Les deux jeux sont choisis de façon à former deux permutations d'un même quadruplet de fréquences sub Nyquist, afin que deux antennes 16 distinctes ne soient pas associées à la même paire de fréquences d'échantillonnage.

Autrement formulé, les signaux reçus sur chacune des 4 antennes sont échantillonnés selon deux fréquences formant l'ensemble ($f_1$, $perm(f_1)$; $f_2$, $perm(f_2)$; $f_3$, $perm(f_3)$; $f_4$, $perm(f_4)$),

où $f_1,f_2,f_3,f_4$ sont les quatre fréquences sub Nyquist distinctes et *perm* est une permutation de l'ensemble $\{f_1, f_2, f_3, f_4\}$, de telle sorte que les signaux reçus sur deux antennes distinctes sont échantillonnés par deux paires distinctes de fréquence d'échantillonnages sub Nyquist.

On dispose ainsi de deux voies de mesure par antenne 16. Chacune des quatre fréquences d'échantillonnage est commune à deux voies de mesures. Il est appelé voie d'échantillonnage les deux voies de mesure partageant la même fréquence d'échantillonnage.

Le module d'échantillonnage 18 comporte deux convertisseurs analogique-numérique 22 par voie de mesure.

Sur l'exemple de la figure 2, le premier convertisseur analogique-numérique 22 de la première antenne 16 est propre à échantillonner le signal à une première fréquence d'échantillonnage $f_1$.

Le deuxième convertisseur analogique-numérique 22 de la première antenne 16 est propre à échantillonner le signal à une deuxième fréquence d'échantillonnage $f_2$.

Le premier convertisseur analogique-numérique 22 de la deuxième antenne 16 est propre à échantillonner le signal à la deuxième fréquence d'échantillonnage $f_2$.

Le deuxième convertisseur analogique-numérique 22 de la deuxième antenne 16 est propre à échantillonner le signal à une troisième fréquence d'échantillonnage $f_3$.

Le premier convertisseur analogique-numérique 22 de la troisième antenne 16 est propre à échantillonner le signal à la troisième fréquence d'échantillonnage $f_3$.

Le deuxième convertisseur analogique-numérique 22 de la troisième antenne 16 est propre à échantillonner le signal à une quatrième fréquence d'échantillonnage $f_4$.

Le premier convertisseur analogique-numérique 22 de la quatrième antenne 16 est propre à échantillonner le signal à la quatrième fréquence d'échantillonnage $f_4$.

Le deuxième convertisseur analogique-numérique 22 de la quatrième antenne 16 est propre à échantillonner le signal à la première fréquence d'échantillonnage $f_1$.

On fait l'hypothèse que le caractère bande étroite et la densité des signaux dans l'environnement sont tels que dans la représentation temps/fréquence d'un signal (dit utile), la situation de parasitage la plus complexe est une situation de parasitage double intervenant sur deux fréquences d'échantillonnage distinctes (un parasite interne et un parasite externe ou deux parasites externes).

Par conséquent, pour un signal donné (considéré comme étant le signal utile), la situation de parasitage est due, soit à un parasite interne, soit à un parasite externe, soit à un parasite interne et un parasite externe sur deux fréquences d'échantillonnage distinctes, soit à deux parasites externes sur deux fréquences d'échantillonnage distinctes. Dans le cas de deux parasites, le dispositif 10 garantit que pour un signal quelconque dans la bande large, la situation de double parasitage se présente sur une antenne au plus.

Le calculateur 20 est propre à traiter chaque voie de mesure pour obtenir la direction d'arrivée.

Le calculateur 20 est, par exemple, un processeur ou un circuit logique programmable.

Le fonctionnement du dispositif de détermination de la direction d'arrivée en présence de mélanges dus au repliement spectral est maintenant décrit.

Le procédé comporte une étape de réception, une étape d'échantillonnage, une étape d'analyse spectrale, une étape de détection de la présence ou de l'absence de signal utile à une pluralité de fréquences, puis, pour tous les signaux utiles détectés, une étape de détermination de la situation de parasitage pour chaque antenne, une étape d'extraction de la phase du signal utile sur les antennes non affectées par le double parasitage et une étape d'estimation de la phase du signal utile sur l'éventuelle antenne affectée par le double parasitage.

A l'étape de réception, un signal est reçu par chaque antenne.

Le récepteur est un interféromètre à $P(P = 4)$ capteurs alignés à diagrammes identiques.

Le signal mesuré en sortie des capteurs forme un vecteur de dimension $P = 4$ dont la composante $p$ s'écrit selon l'équation 1 suivante:

$$s_p(t) = s(t)\exp^{i2\pi d_p \sin\theta/\lambda} + b_p(t), p = 1,...,P$$

Où:

- $\theta$ est l'angle formé par la direction de propagation de l'onde incidente par rapport à l'axe des capteurs,
- $\lambda$ est la longueur d'onde du signal,
- $d_p$ est l'abscisse du capteur $p$ sur l'axe,
- $b_p$ est le bruit sur le capteur $p$, et
- $s$ est l'amplitude du signal, supposé de bande étroite.

A l'étape d'échantillonnage, le signal reçu est échantillonné pour chaque antenne selon deux fréquences d'échantillonnage sub-Nyquist distinctes pour obtenir deux signaux échantillonnés sub-Nyquist.

Comme expliqué précédemment, l'étape d'échantillonnage est mise en œuvre par l'unité d'échantillonnage 18.

L'étape d'analyse spectrale permet d'obtenir une représentation temps/fréquence réalisant une adaptation moyenne à la bande des signaux d'intérêt.

Dans cette étape, sur chaque voie de mesure, une grille temps/fréquence est obtenue par analyse spectrale glissante sur le signal échantillonné. Ces analyses spectrales sont effectuées en déplaçant par pas régulier un support temporel de durée $\Delta T_m$, et en appliquant un banc de filtres par Transformée de Fourier Discrète (TFD) sur ce support. Les résultats constituent une grille bi-dimensionnelle dans laquelle la $i_T{}^{ème}$ colonne représente le résultat de la $i_T{}^{ème}$ analyse spectrale, et dans laquelle la case ou élément d'indice $(i_T, i_F)$ contient une grandeur complexe appelée mesure, représentant le $i_F{}^{ème}$ canal de la $i_T{}^{ème}$ analyse spectrale. Pour simplifier, le double indice en temps et fréquence est ensuite remplacé par un indice unique $n$.

Le modèle devient donc l'équation 2 suivante, pour une mesure $n$ sur une voie de mesure $v$ :

$$z_{v,n} = s_n e^{i2\pi d_{p(v)}\alpha/\lambda} + w_{v,n}$$

Où:

- $p(v)$ est le capteur sur lequel sont faites les mesures de la voie $v$,
- $s_n$ désigne la Transformée de Fourier Discrète des $N_m$ échantillons de $s$ pour l'intervalle temporel et l'intervalle fréquentiel de la case considérée ; $s_n$ est indépendant du capteur,
- $w_{v,n}$ désigne la Transformée de Fourier Discrète du bruit sur l'antenne $p(v)$,
- $d_{p(v)}$ est la distance du capteur $p(v)$ à un capteur pris arbitrairement comme référence,
- $n$ est un double indice parcourant le temps et la fréquence.

Dans tout ce qui suit, il est supposé que le rapport signal à bruit est grand.

Dans ces conditions, la représentation de l'équation 2 peut être remplacée par une décomposition polaire. Dans le cas général (c'est-à-dire en l'absence de parasites), on montre alors que les modules des $z_p$ sont indépendants de $\alpha$ et sont bruités par un bruit qui est indépendant du bruit de phase. On en conclut que les phases (arguments modulo $2\pi$) des $z_v$ sont suffisantes pour l'estimation de $\alpha$, qui est le problème que l'on cherche à résoudre.

Pour simplifier, on peut réécrire l'équation 1 en :

$$z_{v,n} = \left|s_n\right| e^{i2\pi d_{p(v)}\sin\theta/\lambda} e^{i\arg s_n} + w_{v,n} = r_n e^{i\alpha} + w_{v,n}$$

Ce qui s'écrit selon l'équation 3 :

$$z = r e^{ix} + w$$

Les signaux d'intérêt sont des signaux réels haute fréquence et à bande étroite. Ils sont caractérisés par le fait que leur spectre est constitué de deux motifs spectraux à support disjoints, respectivement sur R+ et R-, et constitués d'un nombre limité d'intervalles consécutif, typiquement deux intervalles consécutifs.

Dans le cas général, il n'y a donc pas d'interaction entre les deux motifs spectraux du signal analogique réel. Néanmoins, après sous-échantillonnage, cela ne se vérifie plus lorsque la fréquence radioélectrique est proche d'un multiple de la fréquence de Nyquist, car alors il y a une superposition, dans la première bande de Nyquist, entre une réplique de la partie positive et une réplique de la partie négative du spectre. Dans le cas où le nombre de points de la Transformée de Fourier est pair, la mesure résultante est la somme des deux motifs spectraux, qui sont conjugués l'un de l'autre. Ce phénomène est dit parasitage interne ou intra signal.

Lorsque plusieurs signaux sont présents simultanément dans la bande large, il peut également y avoir interaction, si au moins deux signaux occupent des fréquences dont le reste de la division euclidienne par la bande de fréquence prélevée est identique. On observe alors une superposition, dans la première bande de Nyquist, d'une réplique de la partie positive (ou de la partie négative) du spectre du premier signal avec une réplique de la partie positive (ou de la partie négative) du spectre du deuxième signal. Ce phénomène est dit parasitage externe ou inter signaux.

Afin d'obtenir des informations synchrones et de même résolution spectrale, on impose un début et une fin d'acquisition communes à toutes les TFD. Aussi, les fréquences d'échantillonnage $f_m$ et les nombres de points $N_m$ de chaque TFD vérifient l'équation 4 suivante :

$$N_m . T_m = \Delta T_m = \Delta T = 1 / \Delta F$$

Où :

- $N_m$ représente le nombre de points d'échantillonnage à la fréquence $f_m$,
- $T_m$ représente la période d'échantillonnage (inverse de la fréquence d'échantillonnage $f_m$), et
- $\Delta F$ représente alors la résolution spectrale commune à toutes les voies de mesure.

L'équation 4 implique que le nombre de points $N_m$ est différent d'un échantillonnage à l'autre. Ce choix des fréquences d'échantillonnage $f_m$ de sorte que les fréquences d'échantillonnage soient des multiples de la bande $\Delta F$ permet que d'un échantillonnage à l'autre, les spectres des signaux se décalent d'un nombre entier de multiples de $f_m$, donc d'un nombre entier de multiples de $\Delta F$, c'est-à-dire d'un nombre entier de filtres de Transformées de Fourier Discrètes.

Par ailleurs, les fréquences $f_m$ sont proches les unes des autres, car elles sont choisies proches de la limite atteignable par la technologie, afin de limiter les repliements.

Le nombre de repliements pour une fréquence $f_m$, noté $r_m$, qui est égal à $\dfrac{2B}{f_m}$, est donc proche de la valeur moyenne des $r_m$, qu'on appellera simplement coefficient $r$.

Une autre conséquence de l'équation 4 est que la fréquence vraie d'un signal ne peut être multiple de deux demi-fréquences d'échantillonnage différentes.

En effet, s'il existe une fréquence vraie telle que, pour deux fréquences d'échantillonnage (par exemple, mais sans perte de généralité, $f_1$ et $f_2$) :

$$f = k_1 f_1 / 2 = k_2 f_2 / 2 .$$

Où $k_1$ et $k_2$ sont deux entiers.

Il est alors obtenu $k_1 f_1 = k_2 f_2$.

Comme $N_1 T_1 = N_2 T_2$ il est obtenu $f_2 = f_1 N_2 / N_1$, et donc: $k_1 f_1 = k_2 f_1 N_2 / N_1$, d'où : $k_1 = k_2 N_2 / N_1$,

$$k_1 = k_2 \frac{N_1 + N_2 - N_1}{N_1} = k_2 + k_2 \frac{N_2 - N_1}{N_1}$$

Donc :

$$k_2 \frac{N_2 - N_1}{N_1}$$

Pour que $k_1$ soit entier il faut que $k_2 \dfrac{N_2 - N_1}{N_1}$ soit entier.

On peut supposer sans perte de généralité que $N_2 > N_1$.

Donc $k_2 \dfrac{N_2 - N_1}{N_1}$ est un entier supérieur ou égal à 1, car $N_2 - N_1 \neq 0$.

Donc $k_2 \geq \dfrac{N_1}{N_2 - N_1}$.

Comme les $N_m$ sont très supérieurs au nombre de repliements $r$, et que les $N_m$ sont proches les uns des autres (puisque les $f_m$ sont proches les uns des autres), $k_2$ est grand devant $r$, donc les fréquences vraies susceptibles d'être des multiples de deux demi-fréquences d'échantillonnage différentes sont hors de la bande large.

De tout cela, il résulte que, si, pour une fréquence radioélectrique donnée, il se produit, dans une voie d'échantillonnage, un phénomène de parasitage interne, dû à la superposition du spectre sur une de ses propres répliques, alors le phénomène se produit dans cette voie d'échantillonnage uniquement.

De la même manière, on peut montrer que si une fréquence radioélectrique donnée se superpose, après repliement, dans une voie d'échantillonnage, avec une autre fréquence radioélectrique, alors cette superposition se produit dans cette voie d'échantillonnage uniquement.

En ce qui concerne les mélanges de trois signaux on utilise le fait que les signaux sont bande étroite, et donc parcimonieux en fréquence, ce qui permet de négliger les cas où, pendant la durée d'acquisition $\Delta T$ un signal est parasité par plus que deux autres signaux simultanément. On négligera aussi la possibilité que pendant la durée d'acquisition $\Delta T,$ un signal soit parasité par deux signaux simultanément sur la même fréquence d'échantillonnage.

Ainsi, pour l'ensemble des antennes, seules quatre situations sont possibles.

Selon une première situation, aucune voie d'échantillonnage ne contient de parasite externe, et aucune voie d'échantillonnage ne contient de parasite interne.

Selon une deuxième situation, une des voies d'échantillonnage contient un parasite externe ou interne. Deux antennes ont en commun cette fréquence d'échantillonnage.

Selon une troisième situation, une des voies d'échantillonnage (soit $f_{m1}$ la fréquence d'échantillonnage correspondante) contient un parasite externe, et une deuxième voie d'échantillonnage (soit $f_{m2}$ la fréquence d'échantillonnage correspondante) contient un parasite interne, de telle sorte que $m_2 \neq perm(m_1)$ et $m_1 \neq perm(m_2)$.

Selon une quatrième situation, une des voies d'échantillonnage (soit $f_{m1}$ la fréquence d'échantillonnage correspondante) contient un parasite externe, et une deuxième voie d'échantillonnage (soit $f_{m2}$ la fréquence d'échantillonnage correspondante) contient un parasite interne ou externe, de telle sorte que $m_2 = perm(m_1)$ ou $m_1 = perm(m_2)$. Par conséquent, pour une des antennes (soit $A$ cette antenne), il y a parasitage sur les deux voies de mesure. Pour un signal donné, quelconque, dans la bande large, ce double parasitage concerne une seule antenne qui sera appelée « antenne affectée par le phénomène d'interférence pour les deux fréquences d'échantillonnage » ou « antenne affectée par le double parasitage».

Quelle que soit la situation, on suppose que l'on dispose d'une étape de détection qui détermine si, pour une fréquence radioélectrique quelconque de la bande large, définie à la résolution de l'analyse spectrale, il y a présence ou absence de signal utile.

Une telle fonction est obtenue par exemple par le procédé décrit dans le brevet « Procédé de détection numérique » FR 1400935).

Cette étape de détection est suivie d'une étape de détermination de la situation de parasitage. Cette étape consiste à examiner les quadruplets de fréquences repliées associés à chaque fréquence radioélectrique pour laquelle la présence de signal a été détectée, afin de savoir si certains quadruplets présentent des valeurs communes.

Quand la présence d'un signal utile a été détectée pour une fréquence radioélectrique donnée, cela permet en particulier de savoir si, dans le quadruplet de fréquences repliées qui lui sont associées, zéro, une ou plusieurs valeurs sont en commun avec un autre quadruplet de fréquences repliées associées à d'autres signaux détectés, et donc, si zéro, une ou plusieurs voies d'échantillonnage présentent un parasitage externe.

A l'étape d'extraction, pour les autres antennes que l'antenne affectée par le double parasitage, la phase du signal utile est extraite.

De fait, dans la première situation, sur chaque voie de mesure, il est possible d'extraire la phase du signal utile.

Dans la deuxième situation, une des voies d'échantillonnage contient un parasite externe ou interne. Deux antennes ont en commun cette fréquence d'échantillonnage. L'étape d'extraction est, par exemple, mise en œuvre en exploitant, pour chacune des deux antennes concernées, la fréquence d'échantillonnage qui ne contient pas de parasite; et, pour les autres antennes, qui ne sont pas entachées de parasites, l'une quelconque des deux mesures disponibles ou les deux mesures disponibles.

Dans la troisième situation, aucune antenne n'est parasitée deux fois de sorte que les remarques pour la deuxième situation s'appliquent également.

Pour rappel, la situation 4 est une situation de double parasitage (parasitage sur les deux voies de mesure d'une même antenne). L'étape d'estimation est mise en œuvre dans la situation 4. Cette étape consiste à estimer la phase du signal utile sur l'antenne qui est affectée par le double parasitage.

Dans ce cas, un traitement spécifique est proposé.

Pour cela, il est décrit dans ce qui suit un exemple de réalisation puis il est démontré que le mode de réalisation proposé permet d'obtenir une estimation de la phase du signal utile dans la situation complexe qu'est la situation 4.

L'étape d'estimation de la phase comprend une sous-étape d'estimation du module du signal utile, une sous-étape d'estimation du module du signal parasite, une sous-étape de première estimation d'une première paire de phases candidates, une sous-étape de deuxième estimation d'une deuxième paire de phases candidates, une sous-étape d'association/sélection des phases candidates, une sous-étape de fusion des phases sélectionnées.

A la sous-étape d'estimation du module du signal utile, le module du signal utile est estimé à l'aide des autres antennes que l'antenne affectée par le double parasitage.

A titre d'exemple, l'estimation du module du signal utile à l'aide des autres antennes que l'antenne affectée par le double parasitage est mise en œuvre, par exemple en calculant le module d'une mesure non parasitée (voir équation 3), en appliquant éventuellement un filtrage (lissage), car plusieurs mesures sont disponibles.

A la sous-étape d'estimation du module du signal parasite, le module du signal parasite est estimé à l'aide des autres antennes que l'antenne affectée par le double parasitage.

A titre d'exemple, l'estimation du module du signal parasite à l'aide des autres antennes que l'antenne affectée par le double parasitage est mise en œuvre en calculant le module d'une mesure du signal parasite (voir équation 3), en appliquant éventuellement un filtrage (lissage), car plusieurs mesures sont disponibles. En effet le parasite est lui-même parasité au plus deux fois, et ce, sur deux fréquences différentes.

A la sous-étape de première estimation des phases candidates, il est obtenu des première paire de phases candidates $(\xi_1{}^1, \xi_1{}^2)$ à partir de la mesure, du module du signal utile et du module du signal parasite.

Par exemple, la sous-étape de première estimation d'une première paire de phases candidates $(\xi_1{}^1, \xi_1{}^2)$ comporte le calcul des équations suivantes :

$$\xi_1^1 = \alpha + Arc\cos\frac{\rho^2 + r^2 - r_1^2}{2\rho r}$$

et

$$\xi_1^2 = \alpha - Arc\cos\frac{\rho^2 + r^2 - r_1^2}{2\rho r}$$

Où:

- $\alpha$ est l'argument de la mesure,
- $p$ est le module de la mesure,
- $r$ est le module du signal utile, et
- $r_1$ est le module du signal parasite,

A la sous-étape de deuxième estimation des phases candidates, il est obtenu une deuxième paire de phases candidates $\left(\xi_2^1, \xi_2^2\right)$ à partir de la mesure, et du module du signal utile.

Par exemple, la sous-étape de deuxième estimation d'une deuxième paire de phases candidates $\left(\xi_2^1, \xi_2^2\right)$ comporte le calcul des équations suivantes :

$$\xi_2^1 = Arc\cos(y/2r)$$

et

$$\xi_2^2 = -Arc\cos(y/2r)$$

Où:

- $r$ est le module du signal utile, et
- $y$ est la partie réelle de la mesure.

A la sous-étape d'association/sélection des phases candidates, des valeurs de phases sont sélectionnées parmi les phases candidates.

Pour cela, la sous-étape d'association/sélection comporte l'association des phases candidates pour déterminer les deux valeurs de phase correspondant à une valeur commune représentant la phase vraie, et la sélection de ces deux valeurs de phases. L'association des phases est, selon un cas particulier, mise en œuvre à l'aide d'une règle, la règle étant la règle suivante : $\xi_1^i$ et $\xi_2^j$ sont associés si le couple $\left(\xi_1^i, \xi_2^j\right)$ est le couple parmi les quatre couples $\left(\xi_1^k, \xi_2^l\right)_{k\in\{1,2\}, l\in\{1,2\}}$ qui vérifie $\left|\xi_1^i - \xi_2^j\right| = \underset{k,l}{Min}\left|\xi_1^k - \xi_2^l\right|$.

Le deux $\xi_1^i$ et $\xi_2^j$ associés sont sélectionnés.

A la sous-étape de fusion des phases sélectionnées, l'estimation de la phase du signal utile est mise en œuvre par réalisation du calcul de l'expression suivante :

$$\hat{x} = \frac{\sigma_2^2}{\sigma_1^2 + \sigma_2^2}\xi_1 + \frac{\sigma_1^2}{\sigma_1^2 + \sigma_2^2}\xi_2$$

Où:

- $\hat{x}$ désigne l'estimée de l'argument du signal utile,
- $\xi_1$ est égal au $\xi_1^i$ obtenu dans l'étape d'association/sélection,
- $\xi_2$ est égal au $\xi_2^j$ obtenu dans l'étape d'association/sélection ;

$$\sigma_1^2 = \frac{\sigma^2}{\rho^2}\cdot\frac{4\rho^2 r_1^2}{4\rho^2 r^2 - \left(\rho^2 + r^2 - r_1^2\right)^2},$$

- $\sigma_1^2$ est la variance de $\xi_1$, définie par                                    et

$$\sigma_2^2 = \frac{\sigma^2}{4r^2 - y^2}.$$

- $\sigma_2^2$ est la variance de $\xi_2$, définie par

Comme il va être démontré, les sous-étapes d'estimation du module du signal utile, d'estimation du module du signal parasite, de première estimation d'une première paire de phases candidates, de deuxième estimation d'une deuxième paire de phases candidates, d'association/sélection des phases candidates, de fusion des phases sélectionnée, permettent d'obtenir une estimée de la phase du signal utile dans la quatrième situation.

Soient $r$ et $x$ respectivement le module et l'argument du signal utile.

Soient $r_1$ et $x_1$ le module et l'argument du signal parasite qui intervient avec la fréquence d'échantillonnage $f_{m1}$.

Sur l'antenne A, après sous-échantillonnage à la fréquence $f_{m1}$, la mesure s'exprime comme un mélange du signal utile, du signal parasite et de bruit selon l'équation 5 suivante:

$$z = re^{ix} + r_1 e^{ix_1} + u$$

Les autres cas, à savoir : le mélange du signal utile avec le conjugué du signal parasite, le mélange du conjugué du signal utile avec le signal parasite, le mélange du conjugué du signal utile avec le conjugué du signal parasite, s'écrivent et se traitent de manière analogue.

Sur l'antenne $A$, après sous-échantillonnage à la fréquence $f_{m2}$, on mesure, dans le cas d'un parasitage interne, un mélange du signal utile, de son conjugué, et de bruit, selon l'équation 6 suivante :

$$\zeta = re^{ix} + re^{-ix} + v$$

Où : $u$, $v$ sont deux échantillons indépendants d'une variable aléatoire gaussienne complexe, centrée, de covariance

$$\sigma^2\begin{pmatrix} 1 & 0 \\ 0 & 1 \end{pmatrix}.$$

Il est à noter qu'en toute rigueur $u$ et $v$ ne sont pas exactement indépendants. Leur coefficient de corrélation est égal à l'inverse du nombre d'ambiguïtés fréquentielles.

Il est proposé d'estimer la phase $x$ au moyen des mesures des équations 5 et 6 en supposant que $r$ et $r_1$ sont connus, en remplaçant $r$ et $r_1$ par leur estimée.

Par ailleurs, du fait que la partie imaginaire du signal $\zeta$ ne contient que du bruit l'équation 6 se réduit à une équation 7 :

$$y = \mathrm{Re}(\zeta) = 2r\cos(x) + w$$

Il en résulte que le paramètre $w$ est donc réel gaussien, centré, et de variance $\sigma^2$. Pour avoir un estimateur de la phase x bon en moyenne et ce, quel que soit $x_1$, il est considéré que la phase $x_1$ est une variable aléatoire indépendante des bruits et équirépartie sur l'intervalle $[0,2\pi[$.

Dans l'équation 5, le « bruit » s'exprime ainsi par le terme mathématique $r_1 e^{ix_1} + w$. Cette variable aléatoire a une densité de probabilité qui s'exprime sous la forme de l'équation 8 :

$$p(w_1,\varphi) = \frac{w_1}{2\pi\sigma^2}\exp\left(-\frac{r_1^2 + w_1^2}{2\sigma^2}\right)I_0\left(\frac{r_1 w_1}{\sigma^2}\right)$$

Où :

- $p$ est la densité de probabilité de la phase $x_1$,
- $w_1$ est le module du nombre complexe $r_1 e^{ix_1} + w$, et
- $\varphi$ est l'argument du nombre complexe $r_1 e^{ix_1} + w$.

Il est constaté l'indépendance entre le module et l'argument, le module suivant une loi de Rayleigh modifiée (loi de Rice) et l'argument étant équiréparti.

Lorsque $r_1^2 / 2\sigma^2 \gg 1$ (fort rapport signal à bruit), la fonction de Bessel $I_0(.)$ est approximée par l'expression

$$I_0(z) = e^z / \sqrt{2\pi z}\ .$$

Il en résulte pour l'équation 8 que :

$$p(w_1,\varphi) \approx \frac{w_1}{2\pi\sigma^2}\frac{1}{\sqrt{2\pi}}\frac{\sigma}{\sqrt{r_1 w_1}}\exp\left(-\frac{(w_1 - r_1)^2}{2\sigma^2}\right)$$

Après simplifications et en prenant en compte que $w_1 \approx r_1$ pour $r_1^2 / 2\sigma^2 \gg 1$, il est alors obtenu :

$$p(w_1,\varphi) \approx \frac{1}{2\pi}\frac{1}{\sigma\sqrt{2\pi}}\exp\left(-\frac{(w_1 - r_1)^2}{2\sigma^2}\right)$$

Cette dernière expression indique que l'argument est équiréparti sur le segment $[0,2\pi[$, tandis que le module est approximativement gaussien, centré sur $r_1$ et d'écart-type $\sigma$.

En utilisant les équations 5 et 6, la densité de probabilité des mesures $z$ (sous forme module et argument) et $y$ s'écrit selon l'équation 9 :

$$p(z, y) = \frac{1}{2\pi}\frac{1}{\sigma\sqrt{2\pi}}\exp\left\{-\frac{(|z - re^{ix}| - r_1)^2}{2\sigma^2}\right\} x \frac{1}{\sigma\sqrt{2\pi}}\exp\left\{-\frac{(y - 2r\cos(x))^2}{2\sigma^2}\right\}$$

De manière analogue, il est obtenu l'équation 9bis suivante :

$$p(z,y) = \frac{1}{2\pi}\frac{1}{\sigma\sqrt{2\pi}}\exp\left\{-\frac{\left(\left|z-re^{ix}\right|-r_1\right)^2}{2\sigma^2}\right\}x\frac{1}{2\pi}\frac{1}{\sigma\sqrt{2\pi}}\exp\left\{-\frac{\left(\left|z'-r'e^{ix'}\right|-r'\right)^2}{2\sigma^2}\right\}$$

De prime abord, pour estimer $x$, l'estimateur du maximum de vraisemblance pourrait être mis en œuvre. Un tel estimateur maximise l'expression de l'équation 9 en $x$ pour $z$, $y$, $r$, $r_1$ donnés.

Cela est équivalent à trouver l'estimateur de x noté $\hat{x}$ à l'aide de l'équation 10 suivante :

$$\hat{x} = Arg\,\underset{x}{Min}\left\{\left(\left|z-re^{ix}\right|-r_1\right)^2 + \left(y-2r\cos x\right)^2\right\}$$

Toutefois, l'équation 10 est très non linéaire, et il n'y a pas de solution analytique.

En revanche, comme le rapport signal à bruit est très bon, $\hat{x}$ doit vérifier les approximations 11 suivantes :

$$\left|z-re^{ix}\right|-r_1 \approx 0 \text{ et } y \approx 2r\cos\hat{x}$$

Il est proposé de résoudre séparément chacune des deux équations de l'équation 11 de façon à trouver dans un premier temps des valeurs approchées de l'estimateur $\hat{x}$.

Pour la suite, il est posé les équations suivantes 12a et 12b à partir du système d'équations 11 :

$$\begin{cases} F(z,x) = \left|z-re^{ix}\right| - r_1 = 0 \\ G(y,x) = y - 2r\cos x = 0 \end{cases}$$

Les équations suivantes 12a et 12b forment un système à résoudre dont les solutions seront appelées respectivement $\xi_1$ et $\xi_2$. La dernière étape du traitement consiste à « fusionner » $\xi_1$ et $\xi_2$ pour déterminer l'estimateur $\hat{x}$.

Il est maintenant proposé de qualifier les solutions $\xi_1$ et $\xi_2$ en nombre (ambiguïtés), moyenne et variance.

Nous résolvons l'équation 12a c'est-à-dire que nous cherchons $\xi_1$ qui résout l'équation suivante :

$$F(z,\xi_1) = 0$$

En utilisant le fait que cette expression est équivalente à $|z - re^{i\xi_1}|^2 = r_1^2$, il est obtenu sur la voie parasitée l'équation 13 suivante :

$$\left|z\right|^2 + r^2 - r_1^2 - r\left(ze^{-i\xi_1} + \overline{z}e^{i\xi_1}\right) = 0$$

Posons $|z| = \rho$, $Arg\,z = \alpha$.

L'équation 13 est équivalente à $2pr\cos(\xi_1 - \alpha) = \rho^2 + r^2 - r_1^2$

Donc, à condition que $-1 \le \dfrac{\rho^2 + r^2 - r_1^2}{2\rho r} \le 1,$ il existe deux solutions possibles pour l'estimée de la phase du signal utile dans la voie parasitée qui sont exprimées par le système de l'équation 14 :

$$\xi_1 = \alpha \pm Arc\cos\frac{\rho^2 + r^2 - r_1^2}{2\rho r}$$

Où:

- « arccos » désigne la fonction mathématique arccosinus.
- où $\rho$ et $\alpha$ sont respectivement le module et l'argument de $z$.

L'un de ces estimateurs étant non biaisé, la variance de l'estimateur est trouvée comme suit.

Posons $z = z_0 + u$ (voir équation 5), $\rho_0 = |z_0|$ et $\alpha_0 = Arg(z_0)$.

Cela permet de définir les quantités $\Delta\rho$ et $\Delta\alpha$ par les équations $\rho = \rho_0 + \Delta\rho$ et $\alpha = \alpha_0 + \Delta\alpha$.

Lorsque $|z_0|^2 \gg 2\sigma^2$, la propriété suivante est vérifiée: les quantités $\Delta\rho$ et $\Delta\alpha$ sont deux variables aléatoires indépendantes, gaussiennes, centrées, de variance respective $\sigma^2$ et $\sigma^2 / |z_0|^2$.

A partir de l'équation 14, il est obtenu une autre expression de l'estimée de la phase du signal utile dans la voie parasitée, expression appelée équation 15 :

$$\xi_1 = \alpha_0 + \Delta\alpha \pm Arc\cos\left[\frac{(\rho_0 + \Delta\rho)^2 + r^2 - r_1^2}{2r(\rho_0 + \Delta\rho)}\right]$$

En outre, nous avons :

$$\frac{(\rho_0 + \Delta\rho)^2 + r^2 - r_1^2}{2r(\rho_0 + \Delta\rho)} \approx \frac{\rho_0^2 + 2\rho_0\Delta\rho + r^2 - r_1^2}{2r(\rho_0 + \Delta\rho)}$$

En écrivant le développement limité de l'expression $\dfrac{1}{\left(1 + \dfrac{\Delta\rho}{\rho_0}\right)}$ au premier ordre en $\Delta\rho$, cette expression se transforme en l'équation 16, soit

$$\frac{\rho_0^2 + r^2 - r_1^2}{2r\rho_0} + \frac{\Delta\rho}{r}\left(1 - \frac{\rho_0^2 + r^2 - r_1^2}{2\rho_0^2}\right)$$

De l'équation 15, et en utilisant le fait que la fonction arccos(t) est dérivable sur l'intervalle ]-1;1[ et que sa dérivée vaut $\dfrac{-1}{\sqrt{1 - t^2}}$, il est déduit que :

$$\xi_1 = \alpha_0 + \Delta\alpha \pm Arc\cos\left(\frac{\rho_0^2 + r^2 - r_1^2}{2r\rho_0}\right) \pm \frac{\Delta\rho}{r}\left(\frac{\rho_0^2 - r^2 + r_1^2}{2\rho_0^2}\right)\frac{1}{\sqrt{1 - \frac{(\rho_0^2 + r^2 - r_1^2)^2}{4\rho_0^2 r^2}}}$$

Ce qui s'écrit sous la forme de l'équation 17 :

$$\xi_1 = \alpha_0 + \Delta\alpha \pm Arc\cos\left(\frac{\rho_0^2 + r^2 - r_1^2}{2r\rho_0}\right) \pm \frac{\Delta\rho}{\rho_0}\left(\rho_0^2 - r^2 + r_1^2\right)\frac{1}{\sqrt{4\rho_0^2 r^2 - (\rho_0^2 + r^2 - r_1^2)^2}}$$

Pour comprendre le comportement du terme en $\dfrac{\Delta\rho}{\rho_0}$, il est possible de revenir à $z_0 = re^{ix} + re^{ix_1}$ de façon à ne faire intervenir que $r$, $r_1$, $x$ et $x_1$ :

$$\rho_0^2 = |z_0|^2 = r^2 + r_1^2 + 2rr_1\cos(x-x_1)$$

D'où il résulte, d'une part :

$$\rho_0^2 - r^2 + r_1^2 = 2r_1\left(r_1 + r\cos(x-x_1)\right).$$

Et d'autre part : $\rho_0^2 + r^2 - r_1^2 = 2r\left(r + r_1\cos(x-x_1)\right).$

Il en résulte :

$$
\begin{aligned}
4\rho_0^2 r^2 - \left(\rho_0^2 + r^2 - r_1^2\right)^2 &= 4r^2\left[r^2 + r_1^2 + 2rr_1\cos(x-x_1)\right] - 4r^2\left[r + r_1\cos(x-x_1)\right]^2\\
&= 4r^2\left[r^2 + r_1^2 + 2rr_1\cos(x-x_1) - r^2 - r_1^2\cos^2(x-x_1) - 2rr_1\cos(x-x_1)\right]\\
&= 4r^2\left[r_1^2 - r_1^2\cos^2(x-x_1)\right]\\
&= 4r^2 r_1^2 \sin^2(x-x_1)
\end{aligned}
$$

Il en est déduit l'équation 18 qui est un développement limité de $\xi_1$ en $\Delta\rho$ et $\Delta\alpha$ exprimé en fonction de $x$ et $x_1$ :

$$\xi_1 = \alpha_0 + \Delta\alpha \pm Arc\cos\left(\frac{\rho_0^2 + r^2 - r_1^2}{2\rho_0 r}\right) \pm \frac{\Delta\rho}{\rho_0}\frac{r_1 + r\cos(x-x_1)}{r\sin(x-x_1)}$$

Les quantités $\Delta\alpha$ et $\dfrac{\Delta\rho}{\rho_0}$ sont deux bruits gaussiens, indépendants, centrés et de même variance $\dfrac{\sigma^2}{\rho_0^2}$ si $\dfrac{\sigma^2}{\rho_0^2} \gg 1$.

L'une des deux déterminations de $\xi_1$ est donc non biaisée et de variance :

$$\mathrm{var}(\xi_1) = \frac{\sigma^2}{\rho_0^2} + \frac{\sigma^2}{\rho_0^2}\cdot\frac{\left(\rho_0^2 - r^2 + r_1^2\right)^2}{4\rho_0^2 r^2 - \left(\rho_0^2 + r^2 - r_1^2\right)^2} = \frac{\sigma^2}{\rho_0^2}\cdot\frac{4\rho_0^2 r^2 - \left(\rho_0^2 + r^2 - r_1^2\right)^2 + \left(\rho_0^2 - r^2 + r_1^2\right)^2}{4\rho_0^2 r^2 - \left(\rho_0^2 + r^2 - r_1^2\right)^2}$$

Dans les deux derniers termes du numérateur, tous les termes en puissance de 4 s'annulent.
Il ne reste que les doubles produits, à savoir :

$$-2\rho_0^2 r^2 + 2r^2 r_1^2 + 2\rho_0^2 r_1^2 - 2\rho_0^2 r^2 - 2r^2 r_1^2 + 2\rho_0^2 r_1^2 = -4\rho_0^2 r^2 + 4\rho_0^2 r_1^2$$

En tenant compte du premier terme, le numérateur se réduit donc à $4\rho_0^2 r_1^2$.
En remplaçant le terme $\rho_0$ par le terme $\rho$, il est obtenu la variance de l'estimateur $\xi_1$ avec l'équation 19 qui suit :

$$\mathrm{var}(\xi_1) = \frac{\sigma^2}{\rho^2} \cdot \frac{4\rho^2 r_1^2}{4\rho^2 r^2 - \left(\rho^2 + r^2 - r_1^2\right)^2}$$

Ce que l'on peut réécrire en fonction de $x$ et $x_1$ sous la forme suivante :

$$\mathrm{var}(\xi_1) = \frac{\sigma^2}{\rho^2} + \frac{\sigma^2}{\rho^2} \cdot \frac{(r_1 + r\cos(x - x_1))^2}{r^2 \sin^2(x - x_1)}$$

Résolvons l'équation 12b selon laquelle $G(y, \xi_2) = y - 2r\cos\xi_2 = 0$.
Il est obtenu deux solutions possibles pour $|y| / 2r < 1$ :

$$\xi_2 = \pm Arc\cos(y / 2r)$$

où $y = \mathrm{Re}(\varsigma)$.

L'un de ces estimateurs est non biaisé et il est possible de trouver la variance de l'estimateur comme précédemment.
Il est posé :

$$y = y_0 + w,$$

avec $y_0 = 2r\cos x$

Dans le cas normal où $w / 2r \ll 1$, les solutions de l'équation 12b s'écrivent selon l'équation 20 suivante :

$$\xi_2 = \pm Arc\cos(y_0 / 2r) \pm \frac{w}{2r} \frac{1}{\sqrt{1 - y^2 / 4r^2}}$$

Donc la variance de $\xi_2$ s'exprime selon l'équation 21 suivante :

$$\mathrm{var}(\xi_2) = \frac{\sigma^2}{4r^2 - y^2}$$

Ainsi il y a deux candidats possibles pour $\xi_1$ : $(\xi_1^1, \xi_1^2)$, et deux candidats possibles pour $\xi_2 : \left(\xi_2^1, \xi_2^2\right)$, soit quatre valeurs possibles pour le couple $(\xi_1\ \xi_2)$. Parmi ces quatre couples, en principe un seul correspond à deux valeurs proches de $\xi_1$ et $\xi_2$.

L'ambiguïté sur les valeurs possibles pour x est donc levée en prenant le couple minimisant l'écart entre $\xi_1^i$ et $\xi_2^j$.

Le couple retenu $\left(\xi_1^i, \xi_2^j\right)$ est celui qui vérifie la règle suivante :

$$\left|\xi_1^i - \xi_2^j\right| = \underset{k,l}{Min}\left|\xi_1^k - \xi_2^l\right|$$

Où $i, j, k, l \in \{1,2\}$

Pour simplifier, le couple retenu est noté $(\xi_1, \xi_2)$ dans la suite.

En outre, il est posé ($\sigma_1{}^2 = \text{var}(\xi_1)$) et
$$\sigma_2^2 = \text{var}(\xi_2).$$

Il reste alors à trouver $\hat{x}$ à partir de $\xi_1$ et $\xi_2$.

Pour cela, il est proposé d'estimer $\hat{x}$ par $\alpha\xi_1 + \beta\xi_2$ avec $\alpha + \beta = 1$ de façon que $\hat{x}$ soit non biaisé et de manière à minimiser la variance de $\hat{x}$ :

$$\underset{\alpha,\beta}{Min}\,\text{var}(\hat{x}) = \underset{\alpha,\beta}{Min}\left(\alpha^2\sigma_1^2 + \beta^2\sigma_2^2\right)$$

Le Lagrangien de ce problème d'optimisation est :

$$L(\alpha,\beta) = \alpha^2\sigma_1^2 + \beta^2\sigma_2^2 - \mu(\alpha + \beta - 1)$$

La solution en $(\alpha, \beta)$ est donnée par :

$$\begin{cases} 2\alpha\sigma_1^2 - \mu = 0 \\ 2\beta\sigma_2^2 - \mu = 0 \end{cases} ou \begin{cases} \alpha = \mu/2\sigma_1^2 \\ \beta = \mu/2\sigma_2^2 \end{cases}$$

$$\alpha + \beta = 1 \text{ donne } \frac{\mu}{2}\frac{\sigma_1^2 + \sigma_2^2}{\sigma_1^2\sigma_2^2} = 1, \quad \underset{soit}{\mu} = 2\frac{\sigma_1^2\sigma_2^2}{\sigma_1^2 + \sigma_2^2}$$

Les expressions des paramètres $\alpha$ et $\beta$ s'en déduisent selon les équations 22 suivantes :

$$\alpha = \frac{\sigma_2^2}{\sigma_1^2 + \sigma_2^2}$$

et

$$\beta = \frac{\sigma_1^2}{\sigma_1^2 + \sigma_2^2}$$

D'où l'expression de l'estimée recherchée qui correspond à l'équation 23 suivante :

$$\hat{x} = \frac{\sigma_2^2}{\sigma_1^2 + \sigma_2^2}\xi_1 + \frac{\sigma_1^2}{\sigma_1^2 + \sigma_2^2}\xi_2$$

De même, il est déduit l'expression de la variance de l'estimée recherchée dans l'équation 24 suivante:

$$\text{var}(\hat{x}) = \frac{\sigma_1^2\sigma_2^2}{(\sigma_1^2 + \sigma_2^2)^2}(\sigma_1^2 + \sigma_2^2) = \frac{\sigma_1^2\sigma_2^2}{(\sigma_1^2 + \sigma_2^2)}$$

Où, d'après les équations 19 et 21,

$$\sigma_1^2 = \frac{\sigma^2}{\rho^2} \cdot \frac{4\rho^2 r_1^2}{4\rho^2 r_1^2 - \left(\rho^2 - r^2 + r_1^2\right)^2}$$

et

$$\sigma_2^2 = \frac{\sigma^2}{4r^2 - y^2} \, .$$

Il a été démontré que les sous-étapes de première estimation, de deuxième estimation, et de sélection permettent d'obtenir une estimée de la phase dans la quatrième situation.

Il est à noter que ce raisonnement se transpose aisément pour le cas où la fréquence d'échantillonnage $f_{m2}$ est affectée, non plus d'un parasite interne, mais d'un parasite externe, différent du premier.

La mesure $\zeta$ s'écrit alors selon une équation différente, à savoir l'équation 5bis suivante :

$$\zeta = re^{ix} + r_2 e^{ix_2} + v$$

où $r_2$ et $x_2$ sont respectivement la phase et la module d'un deuxième parasite, intervenant sur une deuxième fréquence d'échantillonnage.

Le système d'équations à résoudre s'écrit alors selon l'équation 12bis suivante :

$$\begin{cases} F(z,x) = \left| z - re^{ix} \right| - r_1 = 0 \\ F_2(\xi,x) = \left| \varsigma - re^{ix} \right| - r_2 = 0 \end{cases}$$

Les différences de phases par rapport à une antenne prise comme référence (phases différentielles) sont alors calculées.

La direction d'arrivée est ensuite calculée à partir des phases différentielles.

Par exemple, le calcul de la direction d'arrivée est mis en œuvre par une technique d'interférométrie.

Dans chaque cas, le procédé exploite avantageusement les approximations selon lesquelles :

$$\left| z - re^{ix} \right| - r_1 \approx 0 \text{ et } y \approx 2r \cos \hat{x}$$

Les cas explicitement décrits correspondent aux cas où l'approximation est comprise comme une égalité.

Toutefois, l'homme du métier comprend que le procédé fonctionne également pour une relation d'approximation interprétée comme une relation d'égalité à une constante près.

Les équations à résoudre sont alors les suivantes :

$$\begin{cases} F(z,x) = \left| z - re^{ix} \right| - r_1 = A_1 \\ G(y,x) = y - 2r \cos x = A_2 \end{cases}$$

Où $A_1$ et $A_2$ sont deux constantes.

De préférence, ces deux constantes sont négligeables par rapport aux termes impliqués.

Il en résulte d'autres formules qui ont pour point commun que la première estimation de la première paire de phases candidates $\xi_1^1$ et $\xi_1^2$ est estimée à partir de la mesure $z$ résultant du mélange du signal utile, du premier signal parasite, et de bruit, et que la deuxième estimation de la deuxième paire de phases candidates $\xi_2^1$ et $\xi_2^2$ est estimée à partir de la mesure $\zeta$ résultant du mélange du signal utile, du deuxième parasite, et de bruit.

Le procédé permet donc de déterminer la direction d'arrivée en présence de repliement spectral.

Plus précisément le procédé décrit repose sur l'élaboration d'un modèle explicite des mesures en présence de parasites ainsi que sur un traitement d'extraction de la phase du signal utile à partir des mesures parasitées.

Le procédé présente l'avantage d'être aisé à mettre en œuvre.

## Revendications

1. Procédé de détermination de la direction d'arrivée de signaux radioélectriques en présence de repliement spectral, le procédé utilisant un réseau (12) interférométrique à quatre antennes (16) à diagrammes identiques, et à échantillonnage par deux fréquences d'échantillonnages distinctes par antenne (16), le repliement spectral étant tel que dans la représentation temps/fréquence d'un signal, le signal étant dit signal utile, au plus une antenne (16) est affectée par un phénomène de parasitage sur ses deux fréquences d'échantillonnage, le phénomène étant dû à un premier parasite externe, et à un deuxième parasite étant soit un deuxième parasite externe, soit un parasite interne, le procédé comprenant :

   - la réception d'un signal par chaque antenne (16),
   - l'échantillonnage des signaux reçus sur chacune des quatre antennes (16) selon deux fréquences sub-Nyquist formant l'ensemble $\{f_1, perm(f_1); f_2, perm(f_2); f_3, perm(f_3); f_4, perm(f_4)\}$, où $f_1, f_2, f_3$ et $f_4$ sont quatre fréquences sub Nyquist distinctes et *perm* est une permutation de l'ensemble $\{f_1, f_2, f_3, f_4\}$, de telle sorte que les signaux reçus sur deux antennes (16) distinctes sont échantillonnés par deux paires distinctes de fréquence d'échantillonnage sub Nyquist.
   - l'analyse spectrale par application, pendant une durée d'acquisition synchrone sur tous les échantillonnages, d'une transformée de Fourier discrète pour obtenir 2P grilles temps-fréquence, chaque élément d'une grille contenant un vecteur complexe appelé mesure,
   - la détection de la présence ou de l'absence de signal utile à une pluralité de fréquences,

   le procédé comprenant également, pour tous les signaux utiles détectés :

   - la détermination de la situation de parasitage pour chaque antenne (16),
   - pour les autres antennes (16) que l'antenne (16) affectée par le double parasitage, l'extraction de la phase du signal utile, et
   - pour l'éventuelle antenne (16) affectée par le double parasitage, l'estimation de la phase du signal utile, comprenant :

      - la première estimation de la première paire de phases candidates $\xi_1^1$ et $\xi_1^2$ est estimée à partir de la mesure $z$ résultant du mélange du signal utile, du premier signal parasite, et de bruit,

      - la deuxième estimation de la deuxième paire de phases candidates $\xi_2^1$ et $\xi_2^2$ est estimée à partir de la mesure $\zeta$ résultant du mélange du signal utile, du deuxième parasite, et de bruit, et
      - sélection de valeurs de phases parmi les phases candidates pour obtenir une estimation de la phase du signal utile sur l'antenne (16) affectée par le double parasitage.

2. Procédé selon la revendication 1, dans lequel la pluralité de fréquences de la détection sont des fréquences analogiques régulièrement espacées d'un intervalle de fréquence inverse au temps d'acquisition.

3. Procédé selon la revendication 1 ou 2, dans lequel la première estimation de premières phases candidates comporte le calcul des équations suivantes :

$$\xi_1^1 = \alpha + Arc\cos\frac{\rho^2 + r^2 - r_1^2}{2\rho r}$$

et

$$\xi_1^2 = \alpha - Arc\cos\frac{\rho^2 + r^2 - r_1^2}{2\rho r}$$

Où:

- $\alpha$ est l'argument de la mesure $z$,
- $\rho$ est le module de la mesure z,
- $r$ est le module du signal utile, et
- $r_1$ est le module du premier signal parasite,

4. Procédé selon l'une quelconque des revendications 1 à 3, dans lequel la deuxième estimation d'une deuxième paire de phases candidates comporte le calcul d'équations en fonction de la nature du deuxième parasite, lorsque le deuxième parasite est une parasite interne, les équations étant

$$\xi_2^1 = Arc\cos(y/2r)$$

et

$$\xi_2^2 = -Arc\cos(y/2r)$$

Où:

- $r$ est le module du signal utile, et
- $y$ est la partie réelle de la mesure $\zeta$

lorsque le deuxième parasite est un parasite externe, les équations étant

$$\xi_2^1 = \alpha + Arc\cos\frac{\rho_2^2 + r^2 - r_2^2}{2\rho_2 r}$$

et

$$\xi_2^2 = \alpha - Arc\cos\frac{\rho_2^2 + r^2 - r_2^2}{2\rho_2 r}$$

Où:

- $\alpha$ est l'argument de la mesure $\zeta$,
- $\rho_2$ est le module de la mesure $\zeta$,
- $r$ est le module du signal utile, et
- $r_2$ est le module du deuxième signal parasite.

5. Procédé selon l'une quelconque des revendications 1 à 4, dans lequel la sélection de valeurs de phases comporte:

- l'association des phases candidates pour déterminer les deux valeurs de phase correspondant à une valeur commune représentant la phase vraie, pour obtenir deux mesures de phases associées, et
- l'estimation de la phase en fusionnant les deux mesures de phases associées.

6. Procédé selon la revendication 5, dans lequel l'association des phases est mise en œuvre à l'aide d'une règle, la règle étant la règle suivante : $\xi_1^i$ et $\xi_2^j$ sont associés si le couple $\left(\xi_1^i, \xi_2^j\right)$ est le couple parmi les quatre couples

$\left(\xi_2^k, \xi_2^l\right)_{k\in\{1,2\},l\in\{1,2\}}$ qui vérifie $\left|\xi_1^i - \xi_2^j\right| = \underset{k,l}{Min}\left|\xi_1^k - \xi_2^l\right|$.

**7.** Procédé selon la revendication 5 ou 6, dans lequel l'estimation de la phase comprend le calcul de l'expression suivante :

$$\hat{x} = \frac{\sigma_2^2}{\sigma_1^2 + \sigma_2^2}\xi_1 + \frac{\sigma_1^2}{\sigma_1^2 + \sigma_2^2}\xi_2$$

Où:

- $\hat{x}$ est l'estimée de la phase du signal utile ;
- $\xi_1$ est égal au $\xi_1^i$ obtenu dans l'étape d'association ;
- $\xi_2$ est égal au $\xi_2^j$ obtenu dans l'étape d'association ;

$$\sigma_1^2 = \frac{\sigma^2}{\rho^2}\cdot\frac{4\rho^2 r_1^2}{4\rho^2 r^2 - \left(\rho^2 + r^2 - r_1^2\right)^2},$$

- $\sigma_1^2$ est la variance de $\xi_1$, définie par ... et
- $\sigma_2^2$ est la variance de $\xi_2$, définie :

$$\sigma_2^2 = \frac{\sigma^2}{4r^2 - y^2},$$

- ∘ lorsque le deuxième parasite est interne, par ... ou
- ∘ lorsque le deuxième parasite est externe, par

$$\sigma_2^2 = \frac{\sigma^2}{\rho_2^2}\cdot\frac{4\rho_2^2 r_2^2}{4\rho^2 r^2 - \left(\rho_2^2 + r^2 - r_2^2\right)^2}$$

**8.** Procédé selon l'une quelconque des revendications 1 à 7, dans lequel le procédé comporte, en outre :

- le calcul de phases différentielles, et
- le calcul de la direction d'arrivée à partir des phases différentielles.

**9.** Dispositif (10) de détermination de la direction d'arrivée de signaux radioélectriques en présence d'un repliement spectral, le dispositif (10) comprenant :

- un réseau (12) interférométrique à quatre antennes (16) à diagrammes identiques et à échantillonnage par deux fréquences d'échantillonnages distinctes par antenne (16), chaque antenne (16) étant propre à recevoir un signal dit signal reçu, le repliement spectral étant tel que dans la représentation temps/fréquence d'un signal, le signal étant dit signal utile, au plus une antenne (16) est affectée par un phénomène de parasitage sur ses deux fréquences d'échantillonnage, le phénomène étant dû à un premier parasite externe, et à un deuxième parasite étant soit un deuxième parasite externe, soit un parasite interne,
- un contrôleur (14) adapté pour mettre en œuvre l'échantillonnage, l'analyse spectrale, la détection de la présence ou de l'absence de signal utile, puis, pour chaque signal utile détecté, la détermination de la situation de parasitage pour chaque antenne, l'extraction de la phase du signal utile sur les autres antennes (16) que l'éventuelle antenne affectée par le double parasitage(16) et l'estimation de la phase de l'antenne (16) affectée par le double parasitage d'un procédé selon l'une quelconque des revendications 1 à 8.

**10.** Dispositif selon la revendication 9, dans lequel le contrôleur (14) comporte une unité d'échantillonnage (18) propre à mettre en œuvre l'échantillonnage du procédé selon l'une quelconque des revendications 1 à 8 et un calculateur (20) propre à mettre en œuvre l'analyse spectrale, la détection de la présence ou de l'absence de signal utile, puis, pour chaque signal utile détecté, la détermination de la situation de parasitage pour chaque antenne, l'extraction de la phase du signal utile pour les autres antennes (16) que l'antenne affectée par le double parasitage (16) et l'estimation de la phase du signal utile pour l'éventuelle antenne (16) affectée par le double parasitage du procédé selon l'une quelconque des revendications 1 à 8.

**11.** Dispositif selon la revendication 10, dans lequel l'unité d'échantillonnage (18) comporte deux convertisseurs analogique-numérique (22) par antenne (16).

**Patentansprüche**

**1.** Verfahren zur Bestimmung der Ankunftsrichtung von Funksignalen bei Vorhandensein eines Alias-Effektes, wobei das Verfahren ein interferometrisches Netz (12) mit vier Antennen (16) mit identischen Diagrammen und mit Abtastung durch zwei unterschiedliche Abtastfrequenzen pro Antenne (16) verwendet, wobei der Alias-Effekt derart ist, dass in der Darstellung Zeit/Frequenz eines Signals, das Signal wird Nutzsignal genannt, höchstens eine Antenne (16) von einem Störungsphänomen auf ihren zwei Abtastfrequenzen beeinflusst wird, wobei das Phänomen durch eine erste externe Störung und eine zweite Störung, sei es eine zweite externe Störung oder eine interne Störung, bedingt ist, wobei das Verfahren umfasst:

- Empfangen eines Signals pro jeweiliger Antenne (16),
- Abtasten der auf jeder der vier Antennen (16) empfangenen Signale gemäß zwei Sub-Nyquist-Frequenzen, die die Anordnung {$f_1$, perm ($f_1$); $f_2$, perm ($f_2$); $f_3$, perm ($f_3$); $f_4$, perm ($f_4$)} bilden, wobei $f_1$, $f_2$, $f_3$ und $f_4$ vier unterschiedliche Sub-Nyquist-Frequenzen sind und perm eine Permutation der Anordnung {$f_1$, $f_2$, $f_3$, $f_4$} ist, derart dass die von zwei unterschiedlichen Antennen (16) empfangenen Signale von zwei unterschiedlichen Sub-Nyquist Abtastfrequenzpaaren abgetastet werden,
- spektrale Analyse durch Anwendung einer diskreten FourierTransformation während einer für alle Abtastungen synchronen Erfassungsdauer, um 2P Zeit-Frequenz Muster zu erhalten, wobei jedes Element eines Musters einen komplexen Vektor, genannt Messung, enthält,
- Detektieren des Vorhandenseins oder des Nichtvorhandenseins des Nutzsignals bei einer Mehrzahl von Frequenzen,
- wobei das Verfahren gleichfalls für alle die detektierten Nutzsignale umfasst:

  - Bestimmen der Störsituation für jede Antenne (16),
  - für die anderen Antennen (16) als die von der doppelten Störung betroffenen Antenne (16), Extrahieren der Phase des Nutzsignals und
  - für die durch die doppelte Störung betroffene Antenne (16), falls vorhanden, Schätzen der Phase des Nutzsignals, umfassend:

    - die erste Schätzung des ersten Kandidatenphasenpaars $\xi_1^1$ und $\xi_1^2$ aus der Messung z geschätzt wird, die aus der Mischung des Nutzsignals, der ersten Störung und des Rauschens resultiert,
    - die zweite Schätzung des zweiten Kandidatenphasenpaars $\xi_2^1$ und $\xi_2^2$ aus der Messung $\zeta$ geschätzt wird, die aus der Mischung des Nutzsignals, der zweiten Störung und des Rauschens resultiert,
    - Auswählen von Phasenwerten aus den Kandidatenphasen, um eine Schätzung der Phase des Nutzsignals an der von der doppelten Störung betroffenen Antenne (16) zu erhalten.

**2.** Verfahren nach Anspruch 1, bei dem die Mehrzahl von Frequenzen der Abtastung analoge Frequenzen sind, die durch ein Frequenzintervall invers zur Erfassungszeit beabstandet sind.

**3.** Verfahren nach Anspruch 1 oder 2, bei der die erste Schätzung von ersten Kandidatenphasen die Berechnung der folgenden Gleichungen aufweist:

$$\xi_1^1 = \alpha + Arc\cos\frac{\rho^2 + r^2 - r_1^2}{2\rho r}$$

und

$$\xi_1^2 = \alpha - Arc\cos\frac{\rho^2 + r^2 - r_1^2}{2\rho r}$$

wobei:

- $\alpha$ das Argument der Messung z ist,
- $\rho$ der Betrag der Messung z ist,
- r der Betrag des Nutzsignals ist und
- $r_1$ der Betrag des ersten Störsignals ist.

4. Verfahren nach einem beliebigen der Ansprüche 1 bis 3, bei dem die zweite Schätzung eines zweiten Kandidatenphasenpaares die Berechnung von Gleichungen abhängig von der Natur der zweiten Störung aufweist, wenn die zweite Störung eine interne Störung ist, sind die Gleichungen

$$\xi_2^1 = Arc\cos(y/2r)$$

und

$$\xi_2^2 = -Arc\cos(y/2r)$$

wobei:

- r der Betrag des Nutzsignals ist und
- y der Realteil der Messung $\zeta$ ist,

wenn die zweite Störung eine externe Störung ist, sind die Gleichungen

$$\xi_2^1 = \alpha + Arc\cos\frac{\rho_2^2 + r^2 - r_2^2}{2\rho_2 r}$$

und

$$\xi_2^2 = \alpha - Arc\cos\frac{\rho_2^2 + r^2 - r_2^2}{2\rho_2 r}$$

wobei:

- $\alpha$ das Argument der Messung $\zeta$ ist,
- $\rho_2$ der Betrag der Messung $\zeta$ ist,
- r der Betrag des Nutzsignals ist und
- $r_2$ der Betrag des zweiten Störsignals ist.

5. Verfahren nach einem beliebigen der Ansprüche 1 bis 4, bei dem das Auswählen der Phasenwerte aufweist:

- Zuordnen von Kandidatenphasen, um die zwei Phasenwerte zu bestimmen, die einem die wahre Phase darstellenden gemeinsamen Wert entspricht, um zwei zugeordnete Phasenmessungen zu erhalten,
- Schätzen der Phase durch Zusammenfügen der zwei zugeordneten Phasenmessungen.

6. Verfahren nach Anspruch 5, bei der das Zuordnen der Phasen mithilfe einer Regel durchgeführt wird, wobei die Regel die folgende Regel ist:

$\xi_1{}^i$ und $\xi_2{}^j$ sind zugeordnet, wenn das Paar $(\xi_1{}^i, \xi_2{}^j)$ das Paar von den vier Paaren $(\xi_2{}^k, \xi_2{}^l)_{k\in\{1,2\}, l\in\{1,2\}}$ ist, das

$$\left|\xi_1^i - \xi_2^j\right| = \underset{k,l}{Min}\left|\xi_1^k - \xi_2^l\right|$$ verifiziert.

7. Verfahren nach Anspruch 5 oder 6, bei der das Schätzen der Phase die Berechnung des folgenden Ausdrucks umfasst:

$$\hat{x} = \frac{\sigma_2^2}{\sigma_1^2 + \sigma_2^2}\xi_1 + \frac{\sigma_1^2}{\sigma_1^2 + \sigma_2^2}\xi_2$$

wobei:

- $\hat{x}$ die Schätzung der Phase des Nutzsignals ist;
- $\xi_1$ gleich $\xi_1{}^i$ ist, das bei dem Zuordnungsschritt erhalten wurde;
- $\xi_2$ gleich $\xi_2{}^j$ ist, das bei dem Zuordnungsschritt erhalten wurde;
- $\sigma_1^2$ die Varianz von $\xi_1$ ist, definiert durch

$$\sigma_1^2 = \frac{\sigma^2}{\rho^2} \cdot \frac{4\rho^2 r_1^2}{4\rho^2 r^2 - \left(\rho^2 + r^2 - r_1^2\right)^2}$$

- $\sigma_2^2$ die Varianz von $\xi_2$, definiert durch:

$$\sigma_2^2 = \frac{\sigma^2}{4r^2 - y^2}$$

o wenn die zweite Störung eine interne ist, ' oder
∘ wenn die zweite Störung eine externe ist,

$$\sigma_2^2 = \frac{\sigma^2}{\rho_2^2} \cdot \frac{4\rho_2^2 r_2^2}{4\rho^2 r^2 - \left(\rho_2^2 + r^2 - r_2^2\right)^2}$$.

8. Verfahren nach einem beliebigen der Ansprüche 1 bis 7, bei dem das Verfahren außerdem aufweist:

   - Berechnen der differentiellen Phasen und
   - Berechnen der Ankunftsrichtung aus den differentiellen Phasen.

9. Vorrichtung (10) zur Bestimmung der Ankunftsrichtung von Funksignalen bei Vorhandensein eines Alias-Effektes, wobei die Vorrichtung umfasst:

   - ein interferometrisches Netz (12) mit vier Antennen (16) mit identischen Diagrammen und mit Abtastung durch zwei unterschiedliche Abtastfrequenzen pro Antenne (16), wobei jede Antenne (16) geeignet ist, ein Signal, genannt Empfangssignal, zu empfangen, wobei der Alias-Effekt derart ist, dass in der Darstellung Zeit/Frequenz eines Signals, das Signal wird Nutzsignal genannt, höchstens eine Antenne (16) von einem Störungsphänomen auf ihren zwei Abtastfrequenzen beeinflusst wird, wobei das Phänomen durch eine erste externe Störung und eine zweite Störung, sei es eine zweite externe Störung oder eine interne Störung, bedingt ist,
   - eine Steuereinrichtung (14), die geeignet ist, die Abtastung, die spektrale Analyse, die Detektion des Vorhandenseins oder Nichtvorhandenseins des Nutzsignals, dann für jedes detektierte Nutzsignal die Bestimmung der Störsituation für jede Antenne, die Extraktion der Phase des Nutzsignals an den anderen Antennen (16) als die von der doppelten Störung betroffenen Antenne (16), falls vorhanden, und die Schätzung der Phase der durch die doppelte Störung betroffenen Antenne (16) gemäß einem Verfahren nach einem beliebigen der Ansprüche 1 bis 8 durchzuführen.

10. Vorrichtung nach Anspruch 9, bei der die Steuervorrichtung (14) eine Abtasteinheit (18), die geeignet ist, die Abtastung des Verfahrens nach einem beliebigen der Ansprüche 1 bis 8 durchzuführen, und einen Rechner (20) aufweist, der geeignet ist, die spektrale Analyse, die Detektion des Vorhandenseins oder Nichtvorhandenseins des Nutzsignals, dann für jedes detektierte Nutzsignal die Bestimmung der Störsituation für jede Antenne, die Extraktion der Phase des Nutzsignals für die anderen Antennen (16) als die von der doppelten Störung gegebenenfalls betroffenen Antenne (16) und die Schätzung der Phase der durch die doppelte Störung betroffenen Antenne (16) gemäß dem Verfahren nach einem beliebigen der Ansprüche 1 bis 8 durchzuführen.

11. Vorrichtung nach Anspruch 10, bei der die Abtasteinheit (18) zwei Analog-Digitalwandler (22) pro Antenne (16) aufweist.

**Claims**

1. A method for determining the direction of arrival of radio signals in the presence of aliasing, the method using an interferometric array (12) with four antennas (16) with identical diagrams, and sampling by two distinct sampling frequencies per antenna (16), the aliasing being such that in the time/frequency representation of a signal, the signal being called wanted signal, a maximum of one antenna (16) is affected by an interference phenomenon on its two sampling frequencies, the phenomenon being due to a first external interference, and a second interference being either a second external interference, or an internal interference,
the method comprising:

   - the reception of a signal by each antenna (16),
   - the sampling of the signals received on each of the four antennas (16) according to two sub-Nyquist frequencies forming the set $\{f_1, perm(f_1); f_2, perm(f_2); f_3, perm(f_3); f_4, perm(f_4)\}$, where $f_1, f_2, f_3$ and $f_4$ are four distinct sub-Nyquist frequencies and *perm* is a permutation of the set $\{f_1, f_2, f_3, f_4\}$, such that the signals received on two distinct antennas (16) are sampled by two distinct pairs of sub-Nyquist sampling frequencies.
   - the spectral analysis by application, during a synchronous acquisition period over all of the samplings, of a discrete Fourier transform to obtain 2P time-frequency grids, each element of a grid containing a complex vector called measurement,
   - the detection of the presence or absence of wanted signal at a plurality of frequencies,

   the method also comprising, for all of the detected wanted signals:

   - the determination of the interference situation for each antenna (16),
   - for the antennas (16) other than the antenna (16) affected by the double interference, the phase of the wanted signal, and
   - for any antenna (16) affected by the double interference, the estimate of the phase of the wanted signal, comprising:

      - the first estimate of the first pair of candidate phases $\xi_1^1$ and $\xi_1^2$ is estimated from the measurement $z$ resulting from the mixture of the wanted signal, the first interference signal and noise,

      - the second estimate of the second pair of candidate phases $\xi_2^1$ and $\xi_2^2$ is estimated from the measurement $\zeta$ resulting from the mixture of the wanted signal, the second interference signal and noise, and
      - selection of phase values from among the candidate phases to obtain an estimate of the phase of the wanted signal on the antenna (16) affected by the double interference.

2. The method according to claim 1, wherein the plurality of frequencies of the detection are analog frequencies regularly spaced apart by a frequency interval that is the inverse of the acquisition time.

3. The method according to claim 1 or 2, wherein the first estimate of first candidate phases includes calculating the following equations:

$$\xi_1^1 = \alpha + Arc\cos\frac{\rho^2 + r^2 - r_1^2}{2\rho r}$$

and

$$\xi_1^2 = \alpha - Arc\cos\frac{\rho^2 + r^2 - r_1^2}{2\rho r}$$

Where:

- $\alpha$ is the argument of the measurement $z$,
- $\rho$ is the modulus of the measurement $z$,
- $r$ is the modulus of the wanted signal, and
- $r_1$ is the modulus of the first interference signal,

4. The method according to any one of claims 1 to 3, wherein the second estimate of a second pair of candidate phases includes calculating equations based on the nature of the second interference,
   when the second interference is an internal interference, the equations being

$$\xi_2^1 = Arc\cos(y/2r)$$

and

$$\xi_2^2 = -Arc\cos(y/2r)$$

Where:

- $r$ is the modulus of the wanted signal, and
- $y$ is the real part of the measurement $\zeta$

when the second interference is an external interference, the equations being

$$\xi_2^1 = \alpha + Arc\cos\frac{\rho_2^2 + r^2 - r_2^2}{2\rho_2 r}$$

and

$$\xi_2^2 = \alpha - Arc\cos\frac{\rho_2^2 + r^2 - r_2^2}{2\rho_2 r}$$

Where:

- $\alpha$ is the argument of the measurement $\zeta$,
- $\rho_2$ is the modulus of the measurement $\zeta$,
- $r$ is the modulus of the wanted signal, and
- $r_2$ is the modulus of the second interference signal.

5. The method according to any one of claims 1 to 4, wherein the selection of phase values includes:

   - the association of candidate phases to determine the two phase values corresponding to a shared value representing the true phase, to obtain two associated phase measurements, and
- estimating the phase by merging the two associated phase measurements.

**6.** The method according to claim 5, wherein the association of the phases is done using a rule, the rule being the following rule:

$\xi_1^i$ and $\xi_2^j$ are associated if the pair $\left(\xi_1^i, \xi_2^j\right)$ is the pair from among the four pairs $\left(\xi_2^k, \xi_2^l\right)_{k \in \{1,2\}, l \in \{1,2\}}$ that verifies $\left|\xi_1^i - \xi_2^j\right| = \underset{k,l}{Min}\left|\xi_1^k - \xi_2^l\right|$.

**7.** The method according to claim 5 or 6, wherein the estimate of the phase comprises calculating the following expression:

$$\hat{x} = \frac{\sigma_2^2}{\sigma_1^2 + \sigma_2^2}\xi_1 + \frac{\sigma_1^2}{\sigma_1^2 + \sigma_2^2}\xi_2$$

Where:

- $\hat{x}$ is the estimate of the phase of the wanted signal;

- $\xi_1$ is equal to the $\xi_1^i$ obtained in the association step;

- $\xi_2$ is equal to the $\xi_2^j$ obtained in the association step;

- $\sigma_1^2$ is the variance of $\xi_1$, defined by $\sigma_1^2 = \frac{\sigma^2}{\rho^2} \cdot \frac{4\rho^2 r_1^2}{4\rho^2 r^2 - \left(\rho^2 + r^2 - r_1^2\right)^2}$, and

- $\sigma_2^2$ is the variance of $\xi_2$, defined:

  ○ when the second interference is internal, by $\sigma_2^2 = \frac{\sigma^2}{4r^2 - y^2}$, or
  ○ when the second interference is external, by

$$\sigma_2^2 = \frac{\sigma^2}{\rho_2^2} \cdot \frac{4\rho_2^2 r_2^2}{4\rho^2 r^2 - \left(\rho_2^2 + r^2 - r_2^2\right)^2}$$

**8.** The method according to any one of claims 1 to 7, wherein the method further includes:

- calculating differential phases, and
- calculating the direction of arrival from differential phases.

**9.** A device (10) for determining the direction of arrival of radio signals in the presence of aliasing, the device (10) comprising:

- an interferometric array (12) with four antennas (16) with identical diagrams, and sampling by two distinct sampling frequencies per antenna (16), each antenna (16) being able to receive a signal called received signal, the aliasing being such that in the time/frequency representation of a signal, the signal being called wanted signal, a maximum of one antenna (16) is affected by an interference phenomenon on its two sampling frequencies, the phenomenon being due to a first external interference, and a second interference being either a second external interference, or an internal interference,

- a controller (14) suitable for carrying out the sampling, the spectral analysis, the detection of the presence or absence of wanted signal, then, for each detected wanted signal, the determination of the interference situation for each antenna, the extraction of the phase of the wanted signal on the antennas (16) other than any antenna affected by the double interference and the estimate of the phase of the antenna (16) affected by the double interference of a method according to any one of claims 1 to 8.

10. The device according to claim 9, wherein the controller (14) includes a sampling unit (18) able to carry out the sampling of the method according to any one of claims 1 to 8 and a computer (20) able to carry out the spectral analysis, the detection of the presence or absence of wanted signal, then, for each detected wanted signal, the determination of the interference situation for each antenna, the extraction of the phase of the wanted signal on the antennas (16) other than the antenna affected by the double interference (16) and the estimate of the phase of the wanted signal for any antenna (16) affected by the double interference of the method according to any one of claims 1 to 8.

11. The device according to claim 10, wherein the sampling unit (18) includes two analog-digital converters (22) per antenna (16).

FIG.1

FIG.2

## RÉFÉRENCES CITÉES DANS LA DESCRIPTION

**Documents brevets cités dans la description**

- WO 20151158615 A
- FR 1400935